# FASCICULE DE BREVET EUROPEEN

(11) **EP 4 373 059 B1**
(45) Date de publication et mention de la délivrance du brevet: **12.08.2026**
(21) Numéro de dépôt: 23210531.2
(22) Date de dépôt: 17.11.2023
(51) Int. Cl.: H04L 67/10, H04L 67/51

(54) **INFRASTRUCTURE DE COMMUNICATION MUNIE D'UN MAILLAGE DE SERVICES ÉTENDU ; PROCÉDÉ ET PRODUIT PROGRAMME D ORDINATEUR ASSOCIÉS**
KOMMUNIKATIONSINFRASTRUKTUR MIT ERWEITERTEM DIENSTNETZ; VERFAHREN UND COMPUTERPROGRAMMPRODUKT DAFÜR
COMMUNICATION INFRASTRUCTURE WITH AN EXTENDED SERVICE MESH; METHOD AND COMPUTER PROGRAM PRODUCT THEREFOR

(30) Priorité: 18.11.2022 FR 2212015
(43) Date de publication de la demande: 22.05.2024
(73) Titulaire: THALES, 92190 Meudon (FR)
(72) Inventeur: WION, Adrien, 92622 Gennevilliers Cedex (FR); PHEMIUS, Kévin, 92622 Gennevilliers Cedex (FR); BOUET, Mathieu, 92622 Gennevilliers Cedex (FR); STOECKLIN, William, 92622 Gennevilliers Cedex (FR)
(74) Mandataire: Lavoix

(56) Documents cités:
- US-B1- 11 019 023
- US-B1- 11 303 712

## Description

L'invention a pour domaine celui des infrastructures de communication et, plus particulièrement, celui du routage de services au sein des infrastructures de communication.

Le routage de services consiste à orienter le trafic sur le réseau de l'infrastructure de communication, entre une application cliente, qui requiert un service, et une instance d'une application de service, qui est capable de rendre le service requis.

Une application cliente (ou client dans ce qui suit) est tout type de logiciel, qui est exécuté sur une machine du réseau, comme un équipement utilisateur, et qui est adapté pour émettre une requête de service.

Une application de service (ou service dans ce qui suit) est tout type de logiciel, qui est exécuté sur une machine du réseau, comme un serveur, et qui est adapté pour rendre le service demandé.

Le routage de services est un routage au niveau applicatif qui ne doit pas être confondu avec un routage au niveau réseau, par exemple un routage IP. Il ne s'agit pas simplement de router les flux vers une machine du réseau désignée par son adresse IP, mais, parmi l'ensemble des applications exécutées sur une machine, de router le trafic depuis ou vers une application particulière, celle-ci étant par exemple désignée par un identifiant de ressource uniforme - URI (« Uniform Resource Identifier »).

Dans une infrastructure de communication, plusieurs instances d'une même application de service sont exécutées au même instant sur différentes machines du réseau. En conséquence, la communication entre un client et un service peut être vue comme une communication « anycast » dans laquelle plusieurs destinataires sont capables de rendre le service demandé par le client.

Le routage de services doit donc conduire à une décision de routage consistant à choisir un destinataire particulier, i.e. à choisir une instance particulière, parmi l'ensemble des destinataires, i.e. des instances d'une même application de service disponibles sur l'infrastructure.

La sélection d'un destinataire peut être faite selon plusieurs critères pour amener à la sélection de l'instance de l'application de service la plus adaptée pour le client. Il peut par exemple s'agir d'un objectif d'équilibrage de la charge entre les différentes instances du service ou encore d'optimisation de la qualité d'expérience de l'utilisateur de l'application cliente en réduisant par exemple la latence d'accès au service.

Plusieurs familles de solutions techniques sont connues pour la réalisation d'un routage.

Dans « le routage IP anycast », les différentes instances d'un service sont identifiées par un même préfixe. Ce préfixe est annoncé via un protocole de routage IP (par exemple OSPF, BGP, ...). La sélection de la meilleure route par le protocole de routage IP oriente le trafic du nœud émetteur sur lequel est exécutée l'application cliente vers le nœud destinataire sur lequel est exécutée l'instance de l'application de service sélectionnée. C'est donc le protocole de routage qui sélectionne la meilleure route entre machines en fonction de critères tels que la topologie du réseau, la politique de routage au sein du réseau, ou encore les métriques du protocole de routage utilisé sur le réseau.

Dans « l'équilibrage de charge » (« load balancing »), la requête de service est dirigée vers l'adresse IP d'un nœud intermédiaire (cette adresse IP étant dénommée adresse IP virtuelle). Ce nœud intermédiaire modifie l'adresse du destinataire avec celle de l'instance de service retenue. Cette solution est la plupart du temps utilisée dans un réseau hébergeant un grand nombre d'instances de service comme un centre de données (« data center »). L'équilibrage de charge est utilisable lorsque la sélection d'une instance de service s'effectue parmi une pluralité d'instances colocalisées chacune de ces instances étant identifiée par une adresse IP différente. Les paquets atteignant l'adresse IP virtuelle du nœud intermédiaire sont redirigés vers l'adresse IP de l'instante de service sélectionnée de manière cohérente. Ainsi l'ensemble des paquets d'un même flux sont dirigés vers la même instance.

Dans « la résolution de nom de domaine », un serveur de nom de domaine - DNS (« Domain Name System ») sélectionne une instance particulière au moment où il effectue la résolution d'un nom de domaine. Plus précisément, lorsqu'un client cherche à atteindre un service, il transmet une requête de résolution au serveur DNS, cette requête contenant un nom de domaine. Le serveur DNS résout le nom de domaine de la requête de résolution. Pour ce faire le DNS lit, dans une base de données, les différentes adresses associées au nom de domaine. Cet ensemble d'adresses est alors ordonné par le DNS. Le DNS répond à la requête de résolution en transmettant au client l'ensemble ordonné des adresses possibles. Le client cherche alors à atteindre la première adresse dans cet ensemble ordonné. Pour orienter le trafic, il suffit alors que le serveur DNS ordonne convenablement les différentes adresses possibles pour diriger le client vers une instance de service déterminée. Le document US 11 019 023 B1 décrit un système permettant la découverte des services de plusieurs clusters en s'appuyant sur un serveur DNS.

Dans « un maillage de services » (« Service Mesh »), une couche dédiée contrôle la communication entre différents services colocalisés sur une grappe de machines (« cluster »). Une grappe, par exemple de serveurs, est un ensemble de machines du même type (terminaux, ordinateurs, serveurs, etc.) en communication le long d'un lien de communication.

De manière classique, un service est en fait atomisé en une pluralité de micro-services élémentaires. La réception d'une requête d'un client demandant la mise en œuvre de ce service déclenche l'exécution d'une série de micro-services. Par exemple, la fourniture du service consiste à exécuter d'abord un micro-service d'interrogation d'une base de données, puis un micro-service de mise en forme de la réponse, et enfin un micro-service de chiffrement de cette réponse. Le maillage de services permet alors la mise en réseau de ces micro-services et la gestion du trafic entre ces micro-services sur le lien de communication de la grappe de machines.

Un maillage de services comporte, associé à chaque instance de service, un proxy de communication. Éventuellement, un proxy d'entrée associé à un service de passerelle assure la connexion entre le lien de communication de la grappe de machines et un réseau de communication externe, comme l'internet. Le maillage de services comporte également un contrôleur, qui permet notamment de découvrir les instances des différents services présents sur la grappe de machines, puis de configurer les différents proxys des instances découvertes afin de gérer finement la répartition du trafic entre ces différentes instances e service. L'étape de découverte permet d'associer un identifiant logique, comme un nom de domaine ou une URI, représentant le type de service de chaque instance déployée, ainsi qu'un identifiant technique pour accéder à une instance particulière, comme une adresse IP).

Ce contrôleur a d'abord pour but de découvrir les instances de service déployées sur la grappe, puis de configurer les proxys de communication de chacune de ces instances en fonction d'une politique de gestion. Cette politique de gestion est définie par un opérateur de gestion préalablement au déploiement de la configuration logicielle de la grappe. Cette politique est donc statique.

De manière annexe, le contrôleur a également pour but de gérer la gestion des certificats pour une communication sécurisée entre proxys de la grappe.

Ainsi, les différents proxys, qui constituent chacun une interface de communication de l'instance de service associé, seront configurés de manière cohérente au sein du maillage de services par les messages d'un plan de contrôle.

Un maillage de services permet de répondre aux différentes limitations des autres solutions techniques indiquées précédemment. Ainsi, un maillage de services permet un routage au niveau des services (couche applicative 7 du modèle OSI - « Open Systems Interconnection »), là où le routage IP anycast permet un routage au niveau du protocole de communication (couche réseau 3 du modèle OSI). Ainsi, le maillage de services offre une granularité beaucoup plus fine.

L'équilibreur de charge, qui offre également une granulation moindre puisqu'il s'appuie sur des identifiants de connexion de la couche 4 du modèle OSI, forme surtout un goulot d'étranglement puisqu'il intercepte l'ensemble des requêtes de service, là où un maillage de services autorise une gestion du trafic en paramétrant chacun des proxys de communication.

Enfin, le serveur DNS peut difficilement répondre rapidement à un évènement de panne ou de surcharge d'une instance de service. Plus généralement, la temporalité de mise à jour d'un serveur de DNS n'est pas compatible avec le niveau de décision requis pour une application cliente.

Cependant, l'inconvénient de la solution technique d'un maillage de services est qu'elle a été pensée pour être déployée en local, sur une grappe de machines, en particulier d'un centre de données.

Or, on souhaiterait faire évoluer le maillage de services pour qu'il puisse fonctionner sur une architecture où les services peuvent être rendus par plusieurs grappes distinctes mais interconnectées par un réseau de communication intermédiaire, notamment des grappes localisées physiquement sur des sites distants.

Il est à noter qu'à l'heure actuelle il est possible d'étendre la découverte réalisée par un maillage de services, à des services offerts sur différentes grappes distinctes, mais en s'appuyant sur une solution centralisée permettant de configurer l'ensemble des grappes et assurer leur cohérence. La répartition du trafic entre ces services est configurée de manière statique, préalablement au déploiement des configurations logicielles de chacune des grappes. Par exemple, le logiciel « Admiral » (marque déposée) permet de développer un maillage de services centralisé et hiérarchique sur plusieurs grappes. Par exemple encore, le document US 11 303 712 B1 présente un système agrégeant une pluralité de grappes, chaque grappe comportant différents services et un registre local. Ce dernier gère les services locaux selon une certaine politique. Pour qu'un service enregistré sur une grappe puisse accéder à un service enregistré sur une autre grappe, chaque grappe est en outre munie d'un contrôleur de registre permettant d'exposer les services d'une grappe. Le contrôleur de registre collecte une liste des services enregistrés auprès du registre local et transmet cette liste à un contrôleur de registre maître centralisé. Ce dernier répartit ensuite les informations reçues entre les différents grappes.

Il n'existe cependant pas de mécanisme de routage de services qui soit adaptatif, c'est-à-dire qui permette de prendre en compte l'évolution dynamique de l'infrastructure de communication au cours de son utilisation, comme la disponibilité des différentes instances de service et l'état du réseau dans la décision de routage de services.

La présente invention a donc pour but de répondre à ce problème.

Pour cela, l'invention a pour objet une infrastructure de communication, un procédé et un produit programme d'ordinateur selon les revendications annexées.

L'invention et ses avantages seront mieux compris à la lecture de la description détaillée qui va suivre d'un mode de réalisation particulier, donnée uniquement à titre d'exemple illustratif et non limitatif, cette description étant faite en se référant aux dessins annexés sur lesquels :
- La figure 1 est une représentation schématique d'un mode de réalisation particulier d'une infrastructure de communication selon l'invention ;
- La figure 2 est une représentation des communications dans l'infrastructure de la figure 1 ;
- La figure 3 est une représentation schématique d'un agent logiciel prévu dans l'infrastructure de la figure 1 ; et,
- La figure 4 est une représentation sous forme de blocs d'un procédé de fonctionnement de l'agent logiciel de la figure 3.

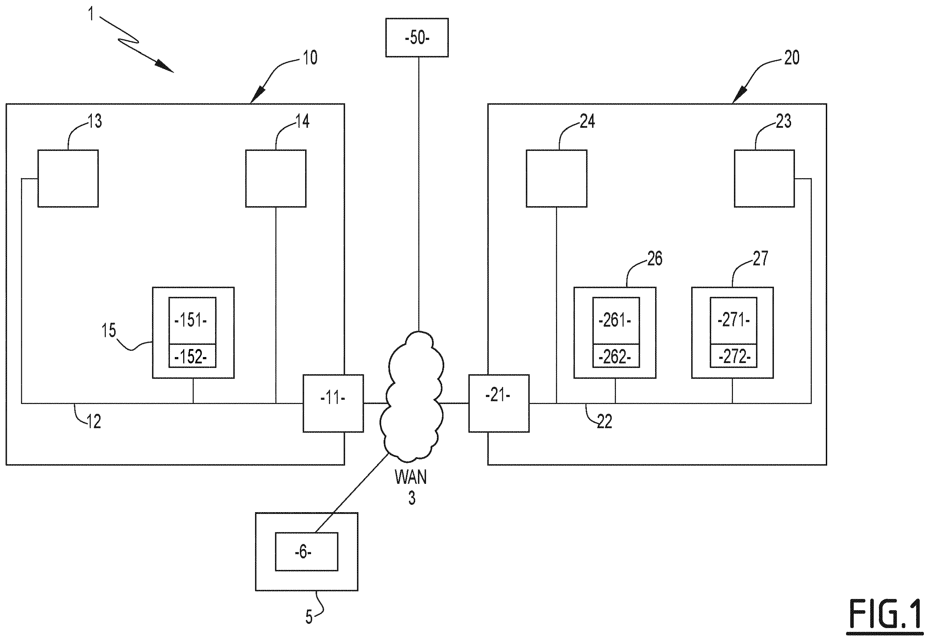

La figure 1 est une représentation schématique d'une infrastructure de communication 1 selon l'invention.

L'infrastructure 1 comporte une première grappe de serveurs 10 et une seconde grappe de serveurs 20.

La première grappe de serveurs 10 et la seconde grappe de serveurs 20 sont interconnectées par un réseau intermédiaire 3. Le réseau 3 est par exemple un réseau local étendu - WAN (« Wide Area Network »).

La première grappe de serveurs 10 comporte une première unité de passerelle 11 permettant d'établir une communication entre un premier lien de communication 12 interne à la première grappe 10 et le réseau 3 externe. Connectés à ce premier lien de communication 12, la grappe 10 comporte au moins une première unité de service 15, un premier contrôleur 13 et un premier agent de routage de services 14.

La première unité de service (parfois dénommée « pod ») intègre une première instance de service 151, associé à un premier proxy de communication 152. Toute communication, aussi bien montante que descendante, entre la première instance de service 151 et le lien de communication 12 s'effectue à travers le proxy 152, agissant par conséquent comme une interface de communication pour la première instance 151.

De manière similaire, la seconde grappe de serveurs 20 comporte une seconde unité de passerelle 21 connectant un second lien de communication 22 de la seconde grappe 20 avec le réseau 3 externe.

Connectés à ce second lien de communication 22, la seconde grappe 20 comporte une seconde unité de service 26, une troisième unité de service 27, ainsi qu'un second contrôleur 23 et un second agent de routage de services 24.

La seconde unité de service 26 renferme une seconde instance de service 261 associée à un second proxy de communication 262 pour communiquer sur le second lien de communication 22.

La troisième unité de service 27 renferme une troisième instance de service 271 interfacée avec le second lien de communication 22 par un troisième proxy de communication 272.

Sur la figure 1, on a représenté un équipement utilisateur 5 connecté au réseau 3. Il exécute une application cliente 6 propre à requérir un service dont la fourniture nécessite l'exécution de l'une et/ou l'autre des instances de service 151, 261, 271.

De préférence, les grappes de serveurs sont configurées par le déploiement d'une configuration logicielle initiale. Celle-ci est fournie par un orchestrateur 50 centralisé qui pousse les éléments de configuration vers chaque grappe. Ces éléments sont par exemple des composants « Kubernetes » (marque déposée). En variante, la configuration logicielle est préparée par un dispositif de planification commun aux différentes grappes, puis transmise à des orchestrateurs locaux équipant chaque grappe, ces derniers étant chargés d'effectuer un déploiement local de la configuration.

La configuration initiale indique le ou les service(s) qu'une grappe doit fournir, ainsi que les contraintes à respecter pour la fourniture de chacun de ces services (par exemple une instance d'un service A doit fonctionner en bénéficiant de x% des capacités de calcul de la machine qui l'exécute et, lorsque cela n'est plus le cas, initialiser sur une autre machine de la grappe une nouvelle instance du service A).

La configuration initiale indique également les éléments du maillage de services local associé à ces services. Elle assigne notamment un ou plusieurs objectif(s) à chaque agent logiciel. Un objectif est une contrainte générale, de haut niveau. Il peut s'agir par exemple d'une autorisation de communication entre les services relevant d'un premier type de services et ceux relevant d'un second type de services à travers le réseau 3. Il peut s'agir par exemple encore d'une contrainte sur la répartition du trafic, comme la répartition équilibrée des flux de données sortant d'une première grappe vers une seconde grappe ou une troisième grappe de l'infrastructure. Cette politique de répartition de flux peut être plus précise et déclinée par service (par exemple pour atteindre un type de service, envoyer 70% du trafic sur l'instance locale, 20% sur un premier site distant et 10% sur un deuxième site).

Le maillage de services local comporte un proxy par instance de service, le contrôleur et l'agent logiciel.

La manière dont ces différentes applications sont exécutées n'est pas précisée. Ainsi, les instances du contrôleur, de l'agent logicielle, d'une unité de service ou d'une unité de passerelle peuvent être colocalisées sur une même machine de la grappe ou sur des machines différentes.

L'homme du métier connait des logiciels comme « Kubernetes » (marque déposée) permettant d'élaborer une configuration logicielle, de déployer cette configuration sur une grappe de machines, et de gérer cette configuration au cours de son exécution (création de nouvelles instances, suppression de certaines instances, etc.)

Ainsi, à chaque grappe est associé un unique maillage de services local, c'est-à-dire un unique contrôleur. Selon l'invention, un maillage de services local comporte en outre un unique agent de routage de services. Un agent de routage de services est donc associé à chaque contrôleur présent sur l'infrastructure. L'agent de routage de services est un logiciel déployé de manière colocalisée avec le contrôleur du maillage de services local que ce contrôleur gère.

Lorsqu'on parlera par exemple du premier agent 14, on parlera du premier contrôleur 13 en tant que contrôleur local ou encore de la première instance de service 151 ou du premier proxy 152 comme une instance de service local ou un proxy local.

L'agent de routage de services peut être un composant logiciel intégré directement au contrôleur local, par exemple en tant que plug-in. Il s'appuie alors avantageusement sur l'interface de programmation - API (« Application Programming Interface ») interne du contrôleur local. Cependant, de préférence, l'agent de routage de services est un logiciel externe s'appuyant sur l'API externe du contrôleur local. Cette dernière solution est préférable pour des raisons d'interopérabilité d'un agent logiciel avec différentes implémentations possibles d'un contrôleur d'un maillage de services local. Cela permet à un même agent de routage de services de pouvoir superviser différents types de contrôleur, par exemple ceux fournis par les maillages de services « linkerd » ou « istio » (<<marques déposées).

La fonction générale d'un agent de routage de services est d'étendre le plan de contrôle aux différentes grappes de manière distribuée, i.e. des différents maillages de services locaux, pour ensemble permettent de répondre à une requête de service d'un utilisateur.

Un agent local découvre localement les instances des services présents. Pour chacune de ces instances, il collecte des informations comportant notamment des métadonnées. Ces métadonnées définissent un objectif particulier pour le routage de service en terme de performance attendue pour ce service donné (par exemple une garantie en terme de latence, de bande passante ou de temps de traitement d'une requête).

L'agent local annonce ces informations aux agents distants de sorte que chaque agent de l'infrastructure puisse établir une topologie des instances de service disponibles sur l'infrastructure.

L'agent local utilise cette topologie des instances de service pour ensuite prendre une décision de routage de services (ou politique optimale dans ce qui suit) et configurer le maillage de service local en conséquence, via le contrôleur local.

Une politique optimale de routage de services, en plus des contraintes exprimées par les métadonnées, s'appuie sur un objectif général de gestion de trafic, par exemple d'équilibrage uniforme de la charge entre les grappes ou asymétrique (par exemple 70/30/10 entre trois sites).

Les contraintes fournies par les métadonnées permettent de sélectionner, parmi l'ensemble des instances de service déployées sur les différentes grappes, le sous ensemble des instances de service qui respectent ces contraintes. L'objectif général de gestion du trafic est alors appliqué sur ce sous ensemble. L'objectif général de gestion du trafic peut être fournie à l'agent local lors du déploiement de la configuration initiale. Cet objectif général peut être précisé avec une granularité allant jusqu'au type de service.

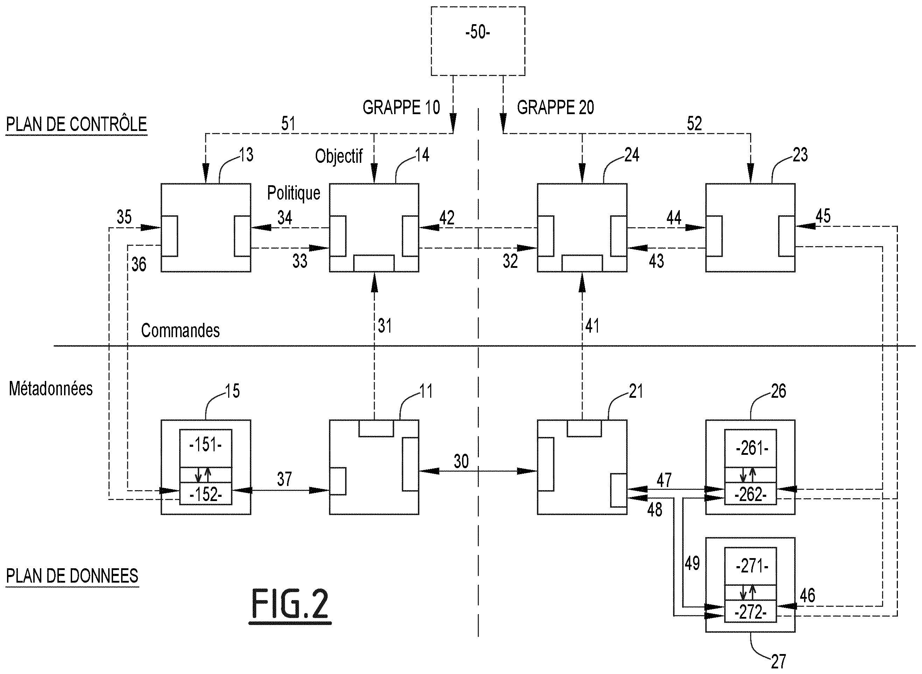

La figure 2 représente les communications sur l'infrastructure de la figure 1.

Les communications se subdivisent en un plan de données et un plan de contrôle.

Le plan de données correspond à l'échange des données entre applications.

Plus précisément, le plan de données permet l'échange de données entre les instances de service. Entre deux instances colocalisées, comme les instances 261 et 271, cette communication s'effectue via une liaison 49 le long du lien de communication 22 de la grappe 20, et les proxys 262 et 272 associés. Entre deux instances distantes, comme les instances 151 et 261, cette communication s'effectue via une liaison 37 (le long du lien de communication 12 entre le proxy 152 et la passerelle 11), une liaison 30 sur le réseau 3, et une liaison 47 (le long du lien de communication 22 entre la passerelle 21 et le proxy 262). De même, entre les instances 151 et 271, cette communication s'effectue via la liaison 37, la liaison 30, et une liaison 48 (le long du lien de communication 22 entre la passerelle 21 et le proxy 272).

Le plan de contrôle correspond aux communications de service permettant le paramétrage des différents proxys associés à chacune des instances des services exécutés à l'instant courant. Ces communications permettent - mais ne sont pas limitées - la découverte des instances des services locaux et la gestion du trafic entre instances de service via la configuration des proxys.

Du côté de la première grappe 10, le plan de contrôle local du maillage de services local comporte le premier contrôleur 13.

Le premier contrôleur 13 est adapté pour recevoir des informations du proxy 152 via un canal 35. De préférence, ces informations permettent de décrire l'instance de service, d'évaluer ses performances courantes (données de télémétrie sur le trafic émis par l'instance de service par exemple), et de définir des contraintes de fonctionnement de l'instance de service considérée.

Ces contraintes sont exprimées par des métadonnées qui donnent les besoins réseau de l'instance de service associée au proxy émetteur. Par exemple, une métadonnée indique la latence optimale requise par l'instance de service pour fonctionner correctement. Plus généralement, ces métadonnées constituent un « accord de niveau de service » - SLA (« Service-Level Agreement ») définissant le niveau de service que souhaite obtenir l'instance de service pour un fonctionnement optimal.

Le premier contrôleur 13 est adapté pour transmettre des commandes de configuration au proxy 152 via un canal 36. Ces commandes peuvent par exemple être une règle de routage du trafic vers des instances de service particulières. Y sont adjoints tous les identifiants techniques nécessaires pour effectuer cette répartition de trafic.

Le plan de contrôle comporte également, pour la première grappe 10, le premier agent 14. Ce dernier permet d'étendre le plan de contrôle local.

Le premier agent 14 est adapté pour recevoir, sur un canal 33, des données du premier contrôleur 13, notamment des informations relatives aux instances de service locales.

Le premier agent 14 est en communication, via un canal 32, avec le second agent 24 de la grappe 20 distante, de manière à lui transmettre des messages d'annonce indiquant les instances exécutées sur la première grappe 10.

Le premier agent 14 reçoit, sur un canal 42, les messages d'annonce émis par le second agent 24 de la grappe 20 distante. Il reçoit ainsi les informations relatives aux instances exécutées sur la seconde grappe 20.

Le premier agent 14 est en communication via un canal 31 avec l'unité de passerelle 11, de manière à recevoir des informations sur l'état instantané du réseau 3 entre les premières et secondes unités de passerelle, 11 et 21. Par exemple, l'état instantané du réseau est donné par la latence instantanée mesurée le long de la liaison 30, ou encore la bande passante mesurée le long de la liaison 30. Ces données relatives à l'état du réseau peuvent être des mesures instantanées ou le résultat d'une métrique fondée sur une série temporelle de mesures.

Le premier agent 14 est en communication via un canal 51 avec l'orchestrateur 50, de manière à recevoir, au moment du déploiement initial, un objectif général de répartition du trafic, comme un objectif général de répartition de charge.

Le premier agent 14 est capable de déterminer une politique optimale de routage de service à l'instant courant. Pour ce faire, l'agent 14 s'appuie sur les métadonnées, les mesures effectuées par la passerelle 11, et l'objectif général défini initialement par l'orchestrateur. La politique optimale définit des contraintes de plus bas niveau. Par exemple, la politique optimale définit la répartition du trafic émis par une instance d'un service A à 50% vers une première instance d'un service B localisée sur la même grappe que l'instance de service A et à 50% vers une seconde instance du service B localisée sur une grappe distante de celle sur laquelle l'instance du service A est exécutée.

Le premier agent 14 est en communication avec le premier contrôleur 13 par un canal 34 permettant au premier agent de transmettre la politique de gestion du trafic qu'il vient d'élaborer, au premier contrôleur 13 en vue de son exécution.

Cette politique permet au contrôleur 13 de considérer, outre les instances de service locales, les instances de services distantes découvertes par l'agent 14, ainsi que la répartition du trafic entre les instances locales ou distantes.

De manière symétrique, sur la seconde grappe 20, le second contrôleur 23 est en communication avec les second et troisième proxys le long d'un canal 46 de manière à les configurer et le long d'un canal 45 pour obtenir des informations sur l'état des services associés.

Le second agent 24 est connecté au second contrôleur 23 par des canaux 43 et 44, à la seconde unité de passerelle 21 par un canal 41, au premier agent de routage de services 14 par les canaux 32 et 42 et à l'orchestrateur de services 50 par un canal 52.

Il est à noter que les canaux 32, 42, 51 et 52 sont des liaisons de communication qui physiquement passent sur le réseau 3, via les passerelles 11 et 21.

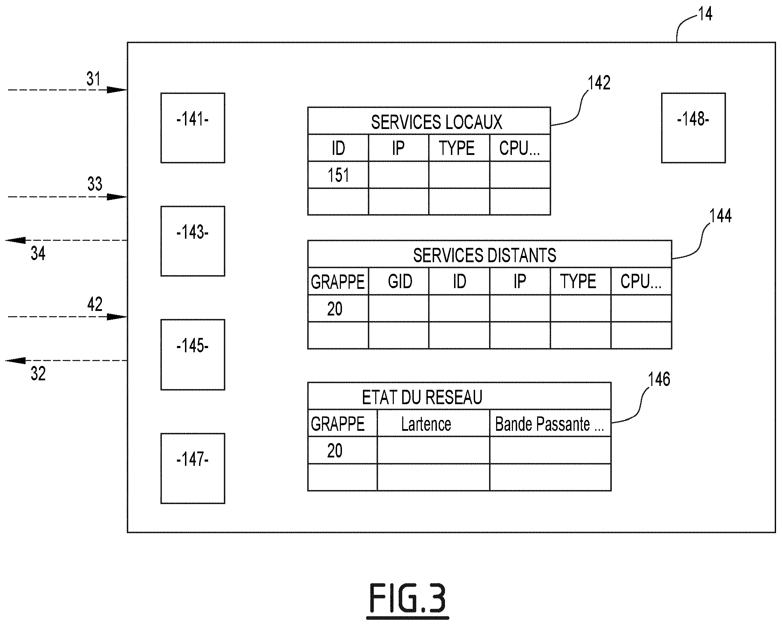

La figure 3 est une représentation fonctionnelle d'un agent de routage de services, tel que l'agent 14.

L'agent 14 comporte un module de découverte des services locaux 141. Ce module est adapté pour interroger le contrôleur local afin de recevoir la liste courante des services locaux qui doivent être exposés entre les différentes grappes, et obtenir des informations sur chacun de ces services, en particulier les métadonnées exprimant des contraintes de fonctionnement. Un service est exposé à la discrétion du contrôleur local par exemple en y associant à ce service, une métadonnée autorisant son annonce distante. Le module 141 est capable d'enregistrer les informations reçues dans une table 142 des services locaux. Dans le mode de réalisation préféré, les informations reçues sont des informations de description (comme le nom du service, le type du service, le tenant locataire ou utilisateur du, des identifiants techniques pour accéder au service comme son adresse IP, son port, ...), des indicateurs de performance (comme le taux d'utilisation du service, la latence courante... ), et des métadonnées (comme des plages de valeurs de SLA).

L'agent 14 comporte un module d'émission-réception d'annonce 143. En émission, ce module génère des messages d'annonce adressés aux agents des autres grappes. Les destinataires de ces messages d'annonce sont connus de l'agent considéré. Ce dernier mémorise par exemple une liste 148 des agents de routage de services distant. Cette table est renseignée lors de la configuration initiale du réseau et le déploiement du maillage de services. Un message d'annonce comporte les informations de la première table 142 qui sont transmises aux agents distants. En réception, le module 143 reçoit les messages d'annonce provenant des agents de routage de services distants. Le module 143 est alors propre à mettre à jour une seconde table 144 dédiée aux services distants.

Les informations mémorisées dans cette seconde table 144 sont par exemple le nom et un identifiant de la grappe sur laquelle est déployé le service distant, le nom du service, le type du service, le tenant locataire ou utilisateur du service, le taux d'utilisation du service, des identifiants techniques pour accéder au service comme son adresse IP, son port, etc.

Ainsi, chaque agent de routage de services est capable de mémoriser l'ensemble des services déployés à l'instant considéré sur l'infrastructure de communication.

Cet échange de messages d'annonce peut être réalisé en mettant en œuvre un système de réplication de données, comme par exemple une base de données distribuée sur les différentes grappes. Par exemple, pour des raisons de résilience, une base de données distribuée du type « finalement cohérente » (« eventually consistent » en anglais).

L'agent 14 comporte un module de détermination de l'état du réseau 145. Ce module est capable d'interroger l'unité de passerelle locale, qui collecte des informations sur l'état du réseau. Le module 145 est propre à tenir à jour une troisième table 146 sur l'état du réseau. Cette table comporte par exemple, pour chaque grappe accessible via une route sur le réseau 3 issue de la passerelle locale, une mesure de la latence le long de cette route et de la bande passante offerte le long de cette route. En variante, d'autres indicateurs peuvent être mesurés et pris en compte.

Enfin, l'agent 14 comporte un module 147 de définition d'une politique optimale à partir des informations des tables 142 et 144 relatives aux services, de la table 146 relative au réseau et de l'objectif général de répartition du trafic défini lors de l'initialisation du « service mesh » par l'orchestrateur 50.

Une fois une politique optimale définie par l'agent, le module 147 est propre à la transmettre au contrôleur local pour que cette politique soit déployée auprès des proxys des différents services locaux.

De la sorte, les proxys réalisent une gestion des communications non seulement entre proxys colocalisés sur une même grappe, mais également des communications entre proxys distants, localisés sur des grappes distinctes.

L'agent 14 est exécuté régulièrement au cours de l'utilisation de l'infrastructure de manière à être capable de prendre en compte toute évolution des servies ou de l'état du réseau. Par exemple, en cas de chute de la bande passante vers une instance de service appartenant à une première grappe distante, un agent peut commander, via le contrôleur associé, la configuration des proxys locaux afin d'orienter le flux vers une autre instance de ce même service exécutée par une seconde grappe différente de la première.

Il est à noter qu'en fonction du type de communication entre services, le maillage de services peut assurer une adhérence aux liaisons déjà établies et prendre en compte la politique mise à jour uniquement pour l'établissement de nouvelles liaisons. Cela permet notamment d'éviter de rompre une liaison en cours, alors que l'instance de services utilisant cette liaison garde un état par rapport à cette liaison.

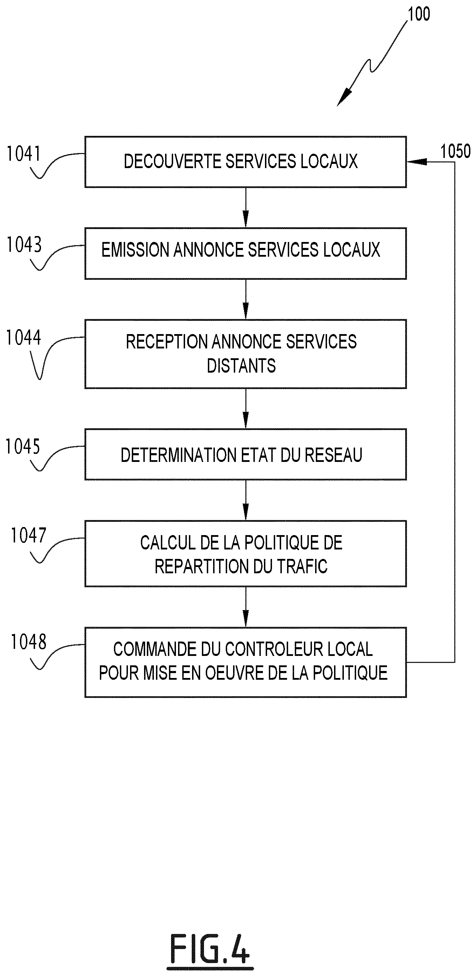

La figure 4 est une représentation sous forme de blocs d'une procédé d'exécution d'un l'agent de routage de services, comme l'agent 14. Le procédé 100 est réalisé à chaque exécution du module 14.

Dans une étape 1041 le module 141 est exécuté pour mettre à jour la table 142.

L'agent 14 interroge le contrôleur local 13 pour connaitre les instances des services exécutées sur la grappe locale à l'instant courant et obtenir des informations sur chacun de ces services, indicateurs de fonctionnement courant et métadonnées. Les informations reçues de la part du contrôleur 13 permettent au module 141 de mettre à jour la table 142.

Dans une étape 1043, le module 143 est exécuté en émission : l'agent 14 élabore des messages d'annonce à partir du contenu de la première table 142 afin de communiquer aux agents distants les instances de service localement mises en oeuvres.

À l'étape 1044, le module 143 est exécuté en réception : l'agent 14 réceptionne les messages d'annonce provenant des agents de routage de services distants. Le module 143 est propre à extraire de ces messages des informations concernant les services exécutés sur les grappes distantes à l'instant courant. Ces informations permettent au module 143 de mettre à jour la table 144 des services distants.

Dans l'étape 1045, l'agent 14 interroge l'unité de passerelle locale 11 afin d'obtenir des indicateurs mis à jour de description de l'état du réseau 3 et des connexions avec les grappes distantes. Ces informations permettent au module 145 de mettre à jour la table 146 relative à l'état du réseau.

Dans l'étape 1047, le module 147 est exécuté de manière à déterminer une politique optimale de répartition du trafic entre instances de service à l'instant courant. Pour cela, le module 147 utilise les informations sur les services disponibles à l'instant courant (première table 142 et seconde table 144), la métrique décrivant l'état instantanée du réseau (table 146), et l'objectif général que met en oeuvre l'agent.

Puis, dans l'étape 1048, le module 147 transmet la politique optimale courante vers le contrôleur local 13 afin que ce dernier configure chacun des proxys des services locaux conformément à la politique optimale déterminée à l'étape 1047. Le contrôleur local 13 exécute la politique optimale courante en émettant des commandes adaptées vers les différents proxys locaux.

Comme indiqué par la boucle 1050, l'agent de routage de services 14 est exécuté périodiquement de manière à gérer le trafic de manière dynamique en tenant compte de l'évolution des services, disponibles à la fois localement et à distance (comme par exemple lancement d'une nouvelle instance, suppression d'une instance inactive, duplication d'une instance fortement demandée, etc.), et de l'état du réseau (comme par exemple une mauvaise bande passante vers une grappe distante ou une interruption de la communication avec cette grappe distante).

La présente invention présente de nombreux avantages.

La solution proposée permet une communication de bout en bout entre grappes distribuées qui est autonome, automatique et résiliente, tout en s'adaptant à la situation opérationnelle.

Le plan de contrôle est étendu entre les différents maillages de service locaux (un maillage étant associé à un contrôleur). Cela permet la découverte non seulement des services locaux mais également des services distants. Le plan de contrôle permet alors la mise en oeuvre d'une boucle de régulation courte pour la gestion du trafic entre les réseaux distants hébergeant des services.

La connectivité entre sites distants, via un ou plusieurs réseaux sous-jacents, pouvant être intermittente ou voir ses caractéristiques évoluer rapidement (comme c'est le cas pour un réseau de périphérie, notamment un réseau de théâtre), le maillage de services est étendu en tenant compte d'une métrique réseau. Cela permet de prendre en compte dynamiquement par exemple la latence instantanée entre deux instances de service exécutées sur des machines distantes, ou encore la bande passante instantanée disponible entre ces deux instances. La prise en compte d'une métrique réseau, éventuellement en association avec d'autres métriques (comme une métrique de charge de calcul ou d'occupation de la mémoire des services), autorise ainsi une gestion adaptative du trafic dans le maillage de services étendu.

Il est à noter que dans les maillages de services selon l'état de la technique, dédiés à un contrôle des communications entre instances de service colocalisées, les hypothèses suivantes sont faites implicitement : puisque les communications s'effectuent sur le lien de communication de la grappe, la latence est quasiment nulle ; de plus, la bande passante disponible sur ce lien de communication est considérée comme infinie. Or, ces hypothèses ne se retrouvent pas dans le cas de services distants. Il y a donc un avantage fort à prendre en compte des contraintes réseaux pour une gestion dynamique des communications entre services distants.

L'extension du plan de contrôle entre les différents maillages locaux s'effectue au prix de l'échange de messages d'annonces. Mais le volume des informations échangées reste minimal et ne dégrade par conséquent pas la bande passante.

Dans l'architecture proposée, il n'y a pas de hiérarchie ni de contrôle centralisé. Le contrôle est délocalisé au niveau de chaque grappe.

La présente invention est une extension de la technique du maillage de services aux architectures de réseau de périphérie, en particulier les réseaux de théâtre. Cette extension du maillage de services reste compatible des maillages de services (« service mesh ») locaux de l'état de la technique.

Il est à noter que les éléments de l'infrastructure de communication de la figure 1 comme les grappes, les agents de routage de services, les contrôleurs, etc., peuvent être supervisés par un orchestrateur de services. Cet orchestrateur de services peut être centralisé entre les différentes grappes. Il constitue une boucle de contrôle longue sur l'infrastructure là où les agents de routage de services constituent une boucle de contrôle courte et par conséquent réactive.

Le maillage de services déployé comporte un agent logiciel associé à chaque contrôleur d'un maillage de services local. Un agent logiciel permet de synchroniser le plan de contrôle local du contrôleur du site qu'il équipe avec celui des sites distants. Les agents logiciels permettent ensemble d'étendre la découverte des services entre les différents sites.

Un agent logiciel vient mettre à jour la politique de répartition mise en œuvre par le contrôleur du maillage de services local. Ainsi, la répartition du trafic par les proxys de services prend en compte les contraintes de communication lorsqu'il s'agit d'une communication entre grappes ou entre sites.

L'invention permet de mettre en place un routage de services adaptatif (i.e. prenant en compte la disponibilité des différentes instances de service et l'état du réseau dans la décision de routage de services), et dynamique (i.e. qui ne s'appuie pas sur une configuration statique, mais prend une décision de routage en fonction des performances des instances de services et/ou de l'infrastructure de communication), et distribué (i.e. qui s'appuie sur un mécanisme de contrôle distribuée entre les différentes grappes constitutives de l'infrastructure).

De plus la présente invention peut s'appuyer sur des métadonnées associées aux types de service, consultables durant l'étape de découverte des services

De plus la présente invention peut s'appuyer sur un objectif général en terme de SLA réseau, ou de charge de l'infrastructure pour des communications entre services distants. Un tel objectif général peut par exemple consister à restreindre l'ensemble des instances de service utilisables pour une communication entre services (par exemple seul seront sélectionnées les instances accessibles en moins de 50 ms de latence et dont la charge CPU n'excède pas 80 %).

Il est à noter que les solutions de l'état de la technique utilisant un point de contrôle centralisé, telles que le logiciel « Admiral » (dans sa version 1.2), permettent de construire une configuration multi-cluster que ce point de contrôle (orchestrateur central ou contrôleur d'orchestrateurs locaux situés dans les différentes grappes) est ensuite capable de déployer. Mais contrairement à l'invention, une fois déployée, cette configuration est essentiellement gelée. Aucune information ne remonte d'une grappe vers l'orchestrateur central ou le moyen mettant en oeuvre le logiciel « Admiral » pour mettre à jour dynamiquement la configuration du plan de contrôle du maillage de service. Par exemple, si une nouvelle instance d'un service A est lancée pour répondre aux contraintes de déploiement du service A sur la grappe, le maillage de services déployé n'est pas impacté. Eu contraire, avec l'invention, l'agent local est informé de cette modification et met à jour la politique du maillage de services. Là où une solution fonde sur un système d'orchestration centralisé une boucle de régulation lente, la présente invention réalise une boucle de régulation rapide.

Puisque la gestion du plan de contrôle s'effectue par des agents locaux, la présente invention est plus résiliente en cas de panne de l'un ou de l'autre agent, qu'une solution fondée sur un point de contrôle centralisé, qui cesse de fonctionner si ce point de contrôle est défaillant ou si les communications avec ce point de contrôle sont rompues.

## Revendications

1. Infrastructure de communication (1) munie d'un maillage de services étendu, l'infrastructure de communication comportant un plan de données et un plan de contrôle, le plan de données comportant une première grappe de machines (10) et une seconde grappe de machines (20) connectées l'une à l'autre par un réseau (3) intermédiaire au moyen respectivement d'une première passerelle (11) et d'une seconde passerelle (21), la première grappe de machines fournissant au moins un premier service (151) muni d'un premier proxy de communication (152) et la seconde grappe de machines fournissant au moins un second service (261) muni d'un second proxy de communication (272),
le plan de contrôle comportant un premier maillage de services local et un second maillage de services local, le premier maillage de services local comportant un premier contrôleur (13) fourni par la première grappe de machines et adapté pour paramétrer le premier proxy de communication pour qu'il mette en œuvre une répartition du trafic définie par le premier contrôleur, et le second maillage de services local comportant un second contrôleur (23) fourni par la seconde grappe de machines et adapté pour paramétrer le second proxy de communication pour qu'il mette en œuvre une répartition du trafic définie par le second contrôleur,
**caractérisée en ce que** la première grappe de machines est munie d'un premier agent de routage de services (14) et la seconde grappe de machines est munie d'un second agent de routage de services (24),
le premier agent de routage de services étant adapté pour :
- découvrir les services locaux exécutés à l'instant courant sur la première grappe de machines en interrogeant le premier contrôleur ;
- émettre et recevoir des messages d'annonce avec le second agent de manière à partager des informations relatives aux services locaux découverts ;
- interroger la première passerelle pour recevoir de la première passerelle (11) des informations sur un état du réseau (3) ;
- en fonction des services locaux exécutés à l'instant courant sur la première grappe de machines, des services distants exécutés à l'instant courant sur la seconde grappe de machines, et des informations sur l'état courant du réseau, déterminer une première politique de répartition du trafic entre les services locaux et les services distants à l'instant courant pour le ou chaque premier proxy de la première grappe de machines ; et,
- commander le premier contrôleur pour que ce dernier déploie la première politique de répartition du trafic,
et le second agent de routage de services étant adapté pour :
- découvrir les services locaux exécutés à l'instant courant sur la seconde grappe de machines en interrogeant le second contrôleur ;
- émettre et recevoir des messages d'annonce avec le premier agent de manière à partager des informations relatives aux services locaux découverts;
- interroger la seconde passerelle pour recevoir de la seconde passerelle (21) des informations sur un état du réseau (3) ;
- en fonction des services locaux exécutés à l'instant courant sur la seconde grappe de machines, des services distants exécutés à l'instant courant sur la première grappe de machines, et des informations sur l'état du réseau, déterminer une seconde politique de répartition du trafic entre les services locaux et les services distants à l'instant courant pour le ou chaque second proxy de la seconde grappes de machines ; et,
- commander le second contrôleur, pour que ce dernier déploie la seconde politique de répartition du trafic.

2. Infrastructure selon la revendication 1, dans laquelle le premier agent de routage de services (14), respectivement le second agent de routage de services (24), est un agent logiciel externe au premier contrôleur (13), respectivement au second contrôleur (23), qui communique avec le premier contrôleur, respectivement le second contrôleur, sur une interface de programmation externe de ce dernier.

3. Infrastructure selon l'une quelconque des revendications 1 à 2, dans laquelle le plan de contrôle est étendu aux première et seconde grappes de machines.

4. Infrastructure selon l'une quelconque des revendications 1 à 3, dans laquelle le premier agent de routage de services (14), respectivement le second agent de routage de services (24), est configuré avec une adresse du second agent de routage de services (24), respectivement du premier agent de routage de services (14).

5. Infrastructure selon l'une quelconque des revendications 1 à 4, dans laquelle le premier agent de routage de services (14), respectivement le second agent de routage de services (24), est configuré avec un objectif général de répartition du trafic.

6. Procédé (100) mis en oeuvre dans une infrastructure de communication (1) conforme à l'une quelconque des revendications 1 à 5, **caractérisé en ce que**, lors de l'exécution du premier agent de routage de services (14), ledit procédé comporte les étapes, effectuées par le premier agent de routage de services (14), de :
- interroger le premier contrôleur (13) pour découvrir les services locaux exécutés sur la première grappe de machines (10) à l'instant courant ;
- émettre un message d'annonce vers le second agent de routage de services avec des informations sur les services locaux découverts;
- recevoir un message d'annonce du second agent de routage de services afin de connaître les services distants exécutés sur la seconde grappe de machines (20) distante à l'instant courant ;
- déterminer une politique de répartition du trafic entre les service locaux et les services distants à l'instant courant ; et,
- communiquer au premier contrôleur la politique déterminée pour exécution par ledit premier contrôleur,
le procédé comportant, en outre, une étape d'interrogation, par le premier agent de routage de services (14), d'une première passerelle (11) reliant la première grappe de machines (10) au réseau (3) intermédiaire, afin d'obtenir un état dudit réseau à l'instant courant, la détermination de la politique de répartition du trafic prenant également en compte l'état du réseau à l'instant courant, le procédé comportant, en outre, les étapes effectuées par le second agent de routage de services, ces étapes étant conformes aux étapes correspondantes de la revendication 1.

7. Procédé selon la revendication 6, dans lequel interroger le premier contrôleur (13) pour découvrir les services locaux exécutés sur la première grappe de machines (10) permet d'obtenir, pour chaque instance d'un service exécutée sur la première grappe de machines, des métadonnées exprimant des contraintes de fonctionnement de l'instance de service considérée.

8. Procédé selon la revendication 6, dans lequel la politique de répartition du trafic entre les service locaux et les services distants à l'instant courant est une politique optimale qui s'appuie, en plus des contraintes exprimées par les métadonnées, sur un objectif général de gestion de trafic.

9. Produit programme d'ordinateur comportant des instructions logicielles qui, lorsqu'elles sont exécutées par une infrastructure de communication conforme à l'une quelconque des revendications 1 à 5 comportant plusieurs ordinateurs mettent en œuvre, par les plusieurs ordinateurs, un procédé selon l'une quelconque des revendications 6 à 8.

## Patentansprüche

1. Kommunikationsinfrastruktur (1) mit erweitertem Dienstnetz, wobei die Kommunikationsinfrastruktur eine Datenebene und eine Steuerebene umfasst, wobei die Datenebene einen ersten Maschinencluster (10) und einen zweiten Maschinencluster (20) umfasst, die über ein zwischengeschaltetes Netz (3) mittels jeweils eines ersten Gateways (11) und eines zweiten Gateways (21) miteinander verbunden sind, wobei der erste Maschinencluster mindestens einen ersten Dienst (151) mit einem ersten Kommunikationsproxy (152) bereitstellt und der zweite Maschinencluster mindestens einen zweiten Dienst (261) mit einem zweiten Kommunikationsproxy (272) bereitstellt,
wobei die Steuerebene ein erstes lokales Dienstnetz und ein zweites lokales Dienstnetz aufweist, wobei das erste lokale Dienstnetz einen ersten von dem ersten Maschinencluster bereitgestellten Controller (13) aufweist, der dazu ausgelegt ist, den ersten Kommunikationsproxy so zu parametrieren, dass dieser eine von dem ersten Controller definierte Verkehrsverteilung implementiert, und wobei das zweite lokale Dienstnetz einen zweiten von dem zweiten Maschinencluster bereitgestellten Controller (23) aufweist, der dazu ausgelegt ist, den zweiten Kommunikationsproxy so zu parametrieren, dass dieser eine von dem zweiten Controller definierte Verkehrsverteilung implementiert,
**dadurch gekennzeichnet, dass** der erste Maschinencluster mit einem ersten Dienstrouting-Agenten (14) versehen ist und der zweite Maschinencluster mit einem zweiten Dienstrouting-Agenten (24) versehen ist,
wobei der erste Dienstrouting-Agent dazu ausgelegt ist:
- die lokal zu dem gegenwärtigen Zeitpunkt auf dem ersten Maschinencluster ausgeführten Dienste durch Abfragen des ersten Controllers zu entdecken;
- mit dem zweiten Agenten Ankündigungsnachrichten zu senden und zu empfangen, um Informationen bezüglich der entdeckten lokalen Dienste gemeinsam zu nutzen;
- das erste Gateway abzufragen, um von dem ersten Gateway (11) Informationen über einen Zustand des Netzes (3) zu empfangen,
- in Abhängigkeit von den lokal zu dem gegenwärtigen Zeitpunkt auf dem ersten Maschinencluster ausgeführten Diensten, den zu dem gegenwärtigen Zeitpunkt auf dem zweiten Maschinencluster ausgeführten entfernten Diensten und den Informationen über den gegenwärtigen Zustand des Netzes eine erste Verkehrsverteilungspolitik zwischen den lokalen Diensten und den entfernten Diensten zu dem gegenwärtigen Zeitpunkt für den oder jeden ersten Proxy des ersten Maschinenclusters zu bestimmen; und
- den ersten Controller anzuweisen, damit dieser die erste Verkehrsverteilungspolitik ausrollt,
und wobei der zweite Dienstrouting-Agent dazu ausgelegt ist:
- die lokal zu dem gegenwärtigen Zeitpunkt auf dem zweiten Maschinencluster ausgeführten Dienste durch Abfragen des zweiten Controllers zu entdecken;
- mit dem ersten Agenten Ankündigungsnachrichten zu senden und zu empfangen, um Informationen bezüglich der entdeckten lokalen Dienste gemeinsam zu nutzen
- das zweite Gateway abzufragen, um von dem zweiten Gateway (21) Informationen über einen Zustand des Netzes (3) zu empfangen,
- in Abhängigkeit von den lokal zu dem gegenwärtigen Zeitpunkt auf dem zweiten Maschinencluster ausgeführten Diensten, den zu dem gegenwärtigen Zeitpunkt auf dem ersten Maschinencluster ausgeführten entfernten Diensten und den Informationen über den Zustand des Netzes eine zweite Verkehrsverteilungspolitik zwischen den lokalen Diensten und den entfernten Diensten zu dem gegenwärtigen Zeitpunkt für den oder jeden zweiten Proxy des zweiten Maschinenclusters zu bestimmen; und
- den zweiten Controller anzuweisen, damit dieser die zweite Verkehrsverteilungspolitik ausrollt.

2. Infrastruktur nach Anspruch 1, wobei der erste Dienstrouting-Agent (14) beziehungsweise der zweite Dienstrouting-Agent (24) ein zu dem ersten Controller (13) beziehungsweise zu dem zweiten Controller (23) externer Software-Agent ist, der mit dem ersten Controller beziehungsweise dem zweiten Controller über eine externe Programmierschnittstelle desselben kommuniziert.

3. Infrastruktur nach einem der Ansprüche 1 bis 2, wobei die Steuerebene auf den ersten und den zweiten Maschinencluster erweitert ist.

4. Infrastruktur nach einem der Ansprüche 1 bis 3, wobei der erste Dienstrouting-Agent (14) beziehungsweise der zweite Dienstrouting-Agent (24) mit einer Adresse des zweiten Dienstrouting-Agenten (24) beziehungsweise des ersten Dienstrouting-Agenten (14) konfiguriert ist.

5. Infrastruktur nach einem der Ansprüche 1 bis 4, wobei der erste Dienstrouting-Agent (14) beziehungsweise der zweite Dienstrouting-Agent (24) mit einem allgemeinen Ziel der Verkehrsverteilung konfiguriert ist.

6. Verfahren (100), das in einer Kommunikationsinfrastruktur (1) nach einem der Ansprüche 1 bis 5 durchgeführt wird, **dadurch gekennzeichnet, dass** bei der Ausführung des ersten Dienstrouting-Agenten (14) das Verfahren die von dem ersten Dienstrouting-Agenten (14) ausgeführten Schritte umfasst:
- Abfragen des ersten Controllers (13), um die lokal auf dem ersten Maschinencluster (10) zu dem gegenwärtigen Zeitpunkt ausgeführten Dienste zu entdecken;
- Senden einer Ankündigungsnachricht mit Informationen über die entdeckten lokalen Dienste an den zweiten Dienstrouting-Agenten;
- Empfangen einer Ankündigungsnachricht durch den zweiten Dienstrouting-Agenten, um die auf dem entfernten zweiten Maschinencluster (20) zu dem gegenwärtigen Zeitpunkt ausgeführten entfernten Dienste zu kennen,
- Bestimmen einer Verkehrsverteilungspolitik zwischen den lokalen Diensten und den entfernten Diensten zu dem gegenwärtigen Zeitpunkt; und
- Übermitteln der zur Ausführung durch den ersten Controller bestimmten Politik an den ersten Controller,
wobei das Verfahren ferner einen Schritt des Abfragens eines ersten Gateways (11), das den ersten Maschinencluster (10) mit dem zwischengeschalteten Netz (3) verbindet, durch den ersten Dienstrouting-Agenten (14) umfasst, um einen Zustand des Netzes zu dem gegenwärtigen Zeitpunkt zu erhalten, wobei die Bestimmung der Verkehrsverteilungspolitik ebenfalls den Zustand des Netzes zu dem gegenwärtigen Zeitpunkt berücksichtigt, wobei das Verfahren ferner die von dem zweiten Dienstrouting-Agenten ausgeführten Schritte umfasst, wobei diese Schritte den entsprechenden Schritten des Anspruchs 1 entsprechen.

7. Verfahren nach Anspruch 6, wobei das Abfragen des ersten Controllers (13), um die lokal auf dem ersten Maschinencluster (10) ausgeführten Dienste zu entdecken, ermöglicht, für jede auf dem ersten Maschinencluster ausgeführte Instanz eines Dienstes Metadaten zu erhalten, die Betriebszwänge der betreffenden Dienstinstanz ausdrücken.

8. Verfahren nach Anspruch 6, wobei die Verkehrsverteilungspolitik zwischen den lokalen Diensten und den entfernten Diensten zu dem gegenwärtigen Zeitpunkt eine optimale Politik ist, die sich zusätzlich zu den durch die Metadaten ausgedrückten Zwängen auf ein allgemeines Ziel der Verkehrsverwaltung stützt.

9. Computerprogrammprodukt, das Softwareanweisungen umfasst, die, wenn sie von einer Kommunikationsinfrastruktur nach einem der Ansprüche 1 bis 5, die mehrere Computer umfasst, ausgeführt werden, durch die mehreren Computer ein Verfahren nach einem der Ansprüche 6 bis 8 durchführen.

## Claims

1. A communication infrastructure (1) equipped with an extended service mesh, the communication infrastructure including a data plane and a control plane, the data plane including a first cluster of machines (10) and a second cluster of machines (20) connected to one another by an intermediate network (3) by means respectively of a first gateway (11) and of a second gateway (21), the first cluster of machines providing at least one first service (151) equipped with a first communication proxy (152) and the second cluster of machines providing at least one second service (261) equipped with a second communication proxy (272),
the control plane including a first local service mesh and a second local service mesh, the first local service mesh including a first controller (13) provided by the first cluster of machines and able to configure the first communication proxy so that it implements traffic distribution defined by the first controller, and the second local service mesh including a second controller (23) provided by the second cluster of machines and able to configure the second communication proxy so that it implements traffic distribution defined by the second controller,
**characterized in that** the first cluster of machines is equipped with a first service routing agent (14), and the second cluster of machines is equipped with a second service routing agent (24),
the first service routing agent being able to:
- discover the local services executed at the current time on the first cluster of machines by querying the first controller;
- send and receive announcement messages with the second agent in such a manner as to share information relative to the discovered local services;
- query the first gateway in order to receive from the first gateway (11) information on a state of the network (3),
- as a function of the local services executed at the current time on the first cluster of machines, of the remote services executed at the current time on the second cluster of machines, and of the information on the current state of the network, determine a first traffic distribution policy between the local services and the remote services at the current time for the or each first proxy of the first cluster of machines; and,
- command the first controller so that the latter deploys the first traffic distribution policy,
and the second service routing agent being able to:
- discover the local services executed at the current time on the second cluster of machines by querying the second controller;
- send and receive announcement messages with the first agent in such a manner as to share information relative to the discovered local services
- query the second gateway in order to receive from the second gateway (21) information on a state of the network (3);
- as a function of the local services executed at the current time on the second cluster of machines, of the remote services executed at the current time on the first cluster of machines, and of the information on the state of the network, determine a second traffic distribution policy between the local services and the remote services at the current time for the or each second proxy of the second cluster of machines; and,
- command the second controller, so that this latter deploys the second traffic distribution policy.

2. The infrastructure according to claim 1, wherein the first service routing agent (14), respectively the second service routing agent (24), is a software agent external to the first controller (13), respectively to the second controller (23), which communicates with the first controller, respectively the second controller, on an external programming interface of this latter.

3. The infrastructure according to any one of claims 1 to 2, wherein the control plane is extended to the first and second clusters of machines.

4. The infrastructure according to any one of claims 1 to 3, wherein the first service routing agent (14), respectively the second service routing agent (24), is configured with an address of the second service routing agent (24), respectively of the first service routing agent (14).

5. The infrastructure according to any one of claims 1 to 4, wherein the first service routing agent (14), respectively the second service routing agent (24), is configured with a general traffic distribution objective.

6. A method (100) implemented in a communication infrastructure (1) in accordance with any one of claims 1 to 5, **characterized in that**, during execution of the first service routing agent (14), said method includes the steps, performed by the first service routing agent (14), of:
- querying the first controller (13) to discover the local services executed on the first cluster of machines (10) at the current time;
- sending an announcement message toward the second service routing agent with information on the discovered local services;
- receiving an announcement message from the second service routing agent in order to know the remote services executed on the remote second cluster of machines (20) at the current time;
- determining a traffic distribution policy between the local services and the remote services at the current time; and,
- communicating to the first controller the policy determined for execution by said first controller,
the method further including a step of querying, by the first service routing agent (14), a first gateway (11) connecting the first cluster of machines (10) to the intermediate network (3), in order to obtain a state of said network at the current time, the determination of the traffic distribution policy also taking into account the state of the network at the current time, the method further including the steps performed by the second service routing agent, these steps being in accordance with the corresponding steps of claim 1.

7. The method according to claim 6, wherein querying the first controller (13) to discover the local services executed on the first cluster of machines (10) allows to obtain, for each instance of a service executed on the first cluster of machines, metadata expressing operating constraints of the service instance under consideration.

8. The method according to claim 6, wherein the traffic distribution policy between the local services and the remote services at the current time is an optimal policy which is based on, in addition to the constraints expressed by the metadata, a general traffic management objective.

9. A computer program product including software instructions which, when they are executed by a communication infrastructure in accordance with any one of claims 1 to 5 including a plurality of computers, implement, by the plurality of computers, a method according to any one of claims 6 to 8.
